# EUROPÄISCHE PATENTSCHRIFT

(11) **EP 0 481 404 B1**
(45) Veröffentlichungstag und Bekanntmachung des Hinweises auf die Patenterteilung: **24.07.1996**
(21) Anmeldenummer: 91117493.6
(22) Anmeldetag: 14.10.1991
(51) Int. Cl.: A01N 47/30, A01N 25/04

(54) **Wässriges herbizides Dispersionskonzentrat, enthaltend Linuron und Monolinuron als Wirkstoffe**
Aqueous herbicidal dispersion concentrate, containing Linuron and Monolinuron as active ingredients
Dispersion concentrée aqueuse et herbicide, contenant Linuron et Monolinuron comme agents actifs

(30) Priorität: 18.10.1990 DE 4033035
(43) Veröffentlichungstag der Anmeldung: 22.04.1992
(73) Patentinhaber: Hoechst Schering AgrEvo GmbH, 13342 Berlin (DE)
(72) Erfinder: Frisch, Gerhard, Dr., W-6393 Wehrheim (DE)

(56) Entgegenhaltungen:
- EP-A- 0 110 174
- EP-A- 0 297 305
- FR-A- 2 144 415

## Beschreibung

Vorliegende Erfindung betrifft ein wäßriges, herbizides Dispersionskonzentrat, enthaltend Linuron und Monolinuron als Wirkstoffe.

Von den Herbiziden Linuron [3-(3,4-Dichlorophenyl)-1-methoxy-1-methylharnstoff] und Monolinuron [3-(4-Chlorphenyl)-1-methoxy-1-methylharnstoff] sind bislang Mischformulierungen in Form benetzbarer Pulver sowie Formulierungen in Form von Emulsionskonzentraten (Handelsprodukt Afalon S^{(R)} der HOECHST AG) bekannt.

Bei der Herstellung von Spritzpulver-Formulierungen sind jedoch kostspielige Mahl- und Filteranlagen sowie häufig teure Trägerstoffe erforderlich. Außerdem zeigen Spritzpulver den Nachteil, bei der Handhabung zu stäuben. Sie lassen sich nur schwierig dosieren. Der Anwender kann durch solche stäubende Formulierungen leicht kontaminiert werden und Schaden nehmen. Aus Spritzpulvern hergestellte Spritzbrühen neigen ferner zur Inhomogenität; die Wirkstoff- und Feststoffteilchen sedimentieren verhältnismäßig schnell.

Die Emulsionskonzentrate der beiden vorgenannten Wirkstoffe weisen insbesondere den Nachteil auf, daß lediglich ein geringer Wirkstoffgehalt von 90 : 90 g/l erreicht werden kann.

Da wäßrige Dispersionen die Nachteile der Spritzpulver nicht aufweisen und aufgrund der Wasserunlöslichkeit von Linuron und Monolinuron prinzipiell höhere Wirkstoffgehalte ermöglichen sowie unter verhältnismäßig geringem apparativem Aufwand hergestellt werden können, wurden Versuche unternommen, wäßrige Dispersionen von beiden Wirkstoffen mit deutlich höherem Wirkstoffgehalt als z.B. die Emulsionskonzentrate herzustellen; jedoch sind derartige Versuche bislang gescheitert, und zwar aufgrund von Kristallwachstum wegen der vergleichsweise guten Löslichkeit der beiden Wirkstoffe in Wasser, aufgrund von Mahlproblemen usw.. Derartige Versuche führten zu wenig stabilen Dispersionen, welche eine starke Flockung, Sedimentation oder gar Zementierung aufwiesen. Auch der Einsatz von Farbstoffen zur Kristallisationsverhinderung führte nicht zu dem gewünschten Ziel einer wäßrigen Dispersion von Linuron mit Monolinuron, die über lange Zeit (2 Jahre bei Raumtemperatur oder 3 Monate bei 50°C) stabil bleibt, kein stabilitätsgefährendes Kristallwachstum zeigt, nicht flockt, sedimentiert oder gar zementiert.

Emulgierbare Konzentrate und Spritzpulver liegen als Einphasensysteme vor; demgegenüber stellen wäßrige Dispersionskonzentrate fester Wirkstoffe Zweiphasensysteme (fest/flüssig) dar, welche in aller Regel instabil sind und zur Entmischung neigen, wobei sich diese Tendenz mit zunehmender Lagerungszeit und -temperatur verstärkt. In der Praxis wird verlangt, daß Dispersionskonzentrate über zwei Jahre lagerungsstabil sein müssen; ferner müssen sie gießfähig bleiben. Das Verfestigen von Dispersionen und/oder irreversible Sedimentbildungen müssen ausgeschlossen werden.

Obgleich theoretische Überlegungen über die Bedingungen zum Aufbau stabiler Suspensionen existieren, sind jedoch direkte Vorhersagen über optimale Formulierungszusätze aufgrund der Vielzahl der zu berücksichtigenden Kriterien nicht möglich. So genügt es beispielsweise in der Praxis zumeist nicht, das Suspensionsverhalten einer einzelnen Produktionscharge zu untersuchen, da geringfügige Änderungen der Anteile von Nebenkomponenten in den einzelnen Wirkstoffchargen die Stabilität der Dispersionen entscheidend beeinträchtigen können.

So erwies es sich als unmöglich, herbizide Harnstoffe, wie z.B. Linuron, unter Zuhilfenahme von partiell hydrolysierten Polyvinylacetaten, wie in der US-PS 4,071,617 beschrieben, optimal zu formulieren, da bei Anwendung dieser Formulierungszusätze sich zähe Sedimente bilden, die nicht redispergierbar sind. Beim Einsatz von nicht-ionischen Emulgatoren, Pflanzengummen und anionischen, oberflächenaktiven Mitteln, z.B. gemäß der US-PS 3,948,636 oder der GB-PS 1 48 010, tritt der gleiche Effekt auf.

Aus der EP 0 110 174 wurden flüssige pestizide Mittel in Form von wäßrigen Suspensionskonzentraten bekannt, welche neben dem Wirkstoff folgende wesentliche Komponenten enthalten:
(1) ein Alkalisalz eines Sulfobernsteinsäurehalbesters, hergestellt durch Umsetzung eines Polyglykolethers eines Kondensationsproduktes aus (C₈- bis C₁₂)-Alkylphenol und Formaldehyd mit Maleinsäureanhydrid und einem Alkalisulfit,
(2) ein Alkalisalz einer Ligninsulfonsäure und
(3) ein quellfähiges Erdalkalisilikat, wobei die Komponenten (2) und (3) in gleichen Teilen im Gemisch vorliegen. In diesem EP wird ausdrücklich darauf hingewiesen, daß es zum völligen Verlust der vorteilhaften Eigenschaften, d.h. insbesondere der Lagerstabilität und Gießfähigkeit, des Suspensionskonzentrats führt, wenn nur eine Komponente der drei wesentlichen Formulierungsbestandteile Sulfobernsteinsäurehalbester, Ligninsulfonsäuresalz und quellfähiges Erdalkalisilikat fehlt, was durch Vergleichsversuche auch nachgewiesen wurde. Unter zahlreichen Pestiziden sind u.a. auch Linuron und Monolinuron zwar als einsetzbare herbizide Wirkstoffe aufgezählt, aber die beschriebenen Formulierungen enthalten weder eine Kombination dieser Wirkstoffe noch ein Puffersystem. Daß dem pH-Wert des Suspensionskonzentrats eine kritische Bedeutung zukommt, ist dieser Druckschrift nicht zu entnehmen.

In EP-A-0 297 305 ist eine Formulierung entsprechend Beispiel 21 beschrieben, welche die Wirkstoffe Linuron und Monolinuron in disperser Form und Glufosinate in gelöster Form sowie eine Tensidkombination aus Sulfobernsteinsäurehalbestersalz, Alkylethersulfat und ethoxyliertem Fettalkohol enthält. Diese Formulierung enthält aber kein Puffersystem.

Es wurde nun überraschenderweise gefunden, daß lagerstabile wäßrige herbizide Dispersionskonzentrate mit einem wesentlich höheren Wirkstoffgehalt an Linuron und Monolinuron im Vergleich zu den bislang bekannten Emulsionskonzentration erhalten werden können, wenn man als Dispergiermittel ein Sulfobernsteinsäurehalbester-Alkalisalz, hergestellt durch Umsetzung eines Polyglykolethers eines Kondensationsprodukts aus einem (C₈- bis C₁₂)-Alkylphenol und Formaldehyd mit Maleinsäureanhydrid und einem Alkalisulfit verwendet, und den pH-Wert des Konzentrates auf 2,5, vorzugsweise 3,0, bis 7,5 einstellt.

Gegenstand vorliegende Erfindung ist somit ein wäßriges herbizides Dispersionskonzentrat, enthaltend
(a) Linuron und Monolinuron als Wirkstoffe, sowie
(b) ein Sulfobernsteinsäurehalbester-Alkalisalz als Dispergiermittel, hergestellt durch Umsetzung eines Polyglykolethers eines Kondensationsproduktes aus einem (C₈- bis C₁₂)-Alkylphenol und Formaldehyd mit Maleinsäureanhydrid und einem Alkalisulfit,
welchem ein Puffersystem zur Einstellung des pH-Wertes auf 2,5, vorzugsweise 3,0, bis 7,5 zugesetzt ist.

Vorzugsweise enthält das Dispersionskonzentrat ferner ein Cotensid, ausgewählt aus der Gruppe der Ligninsulfonate, Alkalisalze einer Sulfonsäure eines Aromatenkondensationsprodukts, und Alkalisalze einer Sulfonsäure eines polymeren Aromaten, das hauptsächlich zur Verbesserung der Dispergier- und Mahleigenschaften dient.

Wie nachfolgende Vergleichsversuche zeigen, sind sowohl das vorgenannte spezielle Dispergiermittel als auch der spezielle Bereich des pH-Wertes kritisch.

Das im erfindungsgemäßen Dispersionskonzentrat eingesetzte Sulfobernsteinsäurehalbester-Alkalisalz, insbesondere -Natriumsalz, kann analog der DE-PS 21 32 405 hergestellt werden, wobei man insbesondere Monooctyl- oder Monononylphenole einsetzt und das Molverhältnis Alkylphenol zu Formaldehyd in den Grenzen von 2 : 1 und 10 : 9 variiert. Der Polyglykolether dieses Kondensationsprodukts aus Alkylphenol und Formaldehyd enthält vorzugsweise 2 bis 8 Mol Alkylenoxideinheiten, insbesondere Ethylenoxideinheiten, pro Mol Alkylphenol. Als Alkalisulfit wird vorzugsweise Natriumsulfit verwendet.

Ein Sulfobernsteinsäurehalbester, der aus 3 Mol Nonylphenol, 18 Mol Ethylenoxid, 2 Mol Formaldehyd, 3 Mol Natriumsulfit und 3 Mol Maleinsäureanhydrid hergestellt wurde, wird bevorzugt; er kann als trockenes Pulver oder in Form einer wäßrigen Lösung (im allgemeinen 35%ig) eingesetzt werden.

Das erfindungsgemäße Dispersionskonzentrat enthält das Alkalisalz des Sulfobernsteinsäurehalbesters in einer Menge von etwa 0,1 bis etwa 20 Gew.%, vorzugsweise 2 - 16 Gew.%.

Das Dispersionskonzentrat kann Linuron und Monolinuron jeweils in einer Menge von etwa 8 bis etwa 35, vorzugsweise 7 bis 23 Gew.% enthalten; der mögliche Wirkstoffgehalt ist demgemäß wesentlich höher als derjenige der bekannten Emulsionskonzentrate.

Das Gewichtsverhältnis der Wirkstoffe Linuron : Monolinuron beträgt etwa 10 : 1 bis 1 : 10, insbesondere etwa 1 : 1.

Wie zuvor erwähnt, enthält das erfindungsgemäße Dispersionskonzentrat vorzugsweise ein spezielles Cotensid; derartige oberflächenaktive Verbindungen sind im Handel erhältlich, wobei auf die in den Anmerkungen zu den nachfolgenden Tabellen I und II genannten Produkte verwiesen wird. Das erfindungsgemäße Dispersionskonzentrat enthält, wenn überhaupt, das Cotensid in einer Menge von 0,1 bis 8 Gew.%, vorzugsweise 1 bis 5 Gew.%.

Der pH-Wert des Dispersionskonzentrats ist für dessen Stabilität wesentlich. Er liegt vorteilhafterweise unter etwa 7,5 und über 2,5, besser etwa 3. Vorzugsweise liegt der pH-Wert bei 3,5 bis 7,0. Wird der vorgenannte breite pH-Wert-Bereich nicht eingehalten, so neigen die Dispersionskonzentrate zur alsbaldigen Instabilität.

Der pH-Wert läßt sich mit Puffersystemen, vorteilhafterweise mit Zitronensäure einschließlich deren Ammonium- und Erdalkalisalzen, Dihydrogenphosphaten, wie z.B. KH₂PO₄ einstellen.

Die erfindungsgemäßen Dispersionskonzentrate können zusätzlich übliche Formulierungshilfsmittel, wie z.B. gefrierpunktsenkende Mittel zur Erhöhung der Froststabilität, Verdicker zur Viskositätsverbesserung, sowie Konservierungsmittel und/oder Entschäumer enthalten.

Beispiele für gefrierpunktsenkende Mittel sind Ethylenglykol, Propylenglykol, Glyzerin, Harnstoff und dergl.

Als Mittel zur Viskositätsverbesserung können übliche anorganische oder organische Verdicker eingesetzt werden; Beispiele für letztere sind solche auf Polysaccharidbasis (z.B. die Handelsprodukte Rhodopol 23^{(R)} der Firma Rhone Poulenc und Kelzan ^{(R)} der Firma Kelco Corp., auf Polyvinylalkoholbasis (Handelsprodukte Mowiol^{(R)} der HOECHST AG) oder auf Methyl-Cellulosebasis (z.B. die Handelsprodukte Tylose^{(R)} der HOECHST AG).

Beispiele für Konservierungsmittel sind Benzoesäure, Sorbitansäure, Formaldehyd sowie Spuren fungizider Wirkstoffe (z.B. die Handelsprodukte Bronidox L^{(R)} der Firma Henkel KGaA, Kobate C^{(R)} der Firma Rhone Poulenc, Mergal KM 200^{(R)} der Firma Riedel-de Haen).

Beispiele für Entschäumer schließlich sind solche auf Siliconbasis (Handelsprodukte Silcolapse^{(R)} der Firma Rhone Poulenc und die Antischaummittelreihe der Firma Wacker Chemie GmbH, z.B. der Entschäumer SE 2).

Zur Herstellung der erfindungsgemäßen Dispersionskonzentrate verrührt man die Komponenten mit Wasser, zerkleinert die erhaltene grobteilige Suspension gegebenenfalls durch Vermahlen in einer Korund- oder Zahnscheibenmühle auf Feinheiten von etwa 200 Micron und mahlt das Produkt anschließend in Reibkugelmühlen oder Sandmühlen, bis die Partikel der Dispersion in Teilchengrößen von 0,1 bis 10 Micron, vorzugsweise unter 5 Micron, vorliegen. Die Teilchengrößen werden mittels einer Scheibenzentrifuge oder einem Coulter-Counter-Zählgerät bestimmt.

Die Anwendung des erfindungsgemäßen Dispersionskonzentrats erfolgt auf einfache Weise dadurch, daß man die Dispersionskonzentrate mit der gewünschten Menge Wasser verdünnt, kurz verrührt und auf die Pflanze aufbringt. Die aus den erfindungsgemäßen Dispersionskonzentraten erhaltenen Spritzbrühen zeichnen sich gegenüber den aus Spritzpulvern oder emulgierbaren Konzentraten hergestellten Spritzbrühen insbesondere durch eine gleichmäßige Verteilung der Wirkstoffe aus, die auch nach 24-stündigem Stehen noch erhalten bleibt. Spritzpulversuspensionen entmischen sich hingegen sehr schnell; häufig hat sich nach einer Standzeit von einer halben Stunde schon die Hälfte des Wirkstoffes abgesetzt. Emulsionen hingegen zeigen den Nachteil, daß sie, worauf bereits weiter oben hingewiesen wurde, nur mit einem geringen Gehalt an den Wirkstoffen Linuron und Monolinuron herstellbar sind.

Nachfolgende Beispiele dienen zur näheren Erläuterung der Erfindung.

### Beispiele 1 bis 20

Aus den jeweiligen, in folgender Tabelle I angeführten Komponenten wurden wäßrige Suspensionskonzentrate mit einem Gehalt an Linuron und Monolinuron als Wirkstoffen hergestellt, indem man die Bestandteile in einer Reibkugelmühle mit Glaskugeln von 2 mm Durchmesser vermahlte.

Die Dispersionen wurden auf solche Feinheiten vermahlen, daß 90 Gew.% der suspendierten Teilchen einen Durchmesser von unter 5 Micron, und 30 bis 40 Gew.% der Teilchen einen Durchmesser von weniger als 1 Micron besaßen, wobei die Teilchengrößen mit einer Scheibenzentrifuge gemessen wurden.

Die in der Tabelle I angeführten erfindungsgemäßen Zusammensetzungen erwiesen sich bei einer Lagerzeit von 3 Monaten bei 50°C als stabil und als anwendungstechnisch einwandfrei.

### Vergleichsbeispiele 1 bis 7

Die in Tabelle II angeführten Zusammensetzungen hingegen zeigten Flockung und starke Sedimentation, in einigen Fällen sogar Zementierung. Dies ist dadurch bedingt, daß sie nicht das Dispergiermittel Sulfobernsteinsäurehalbester-Alkalisalz gemäß der Erfindung enthielten und/oder einen pH-Wert oberhalb 7,5 (oberer Grenzwert gemäß der Erfindung) aufwiesen.

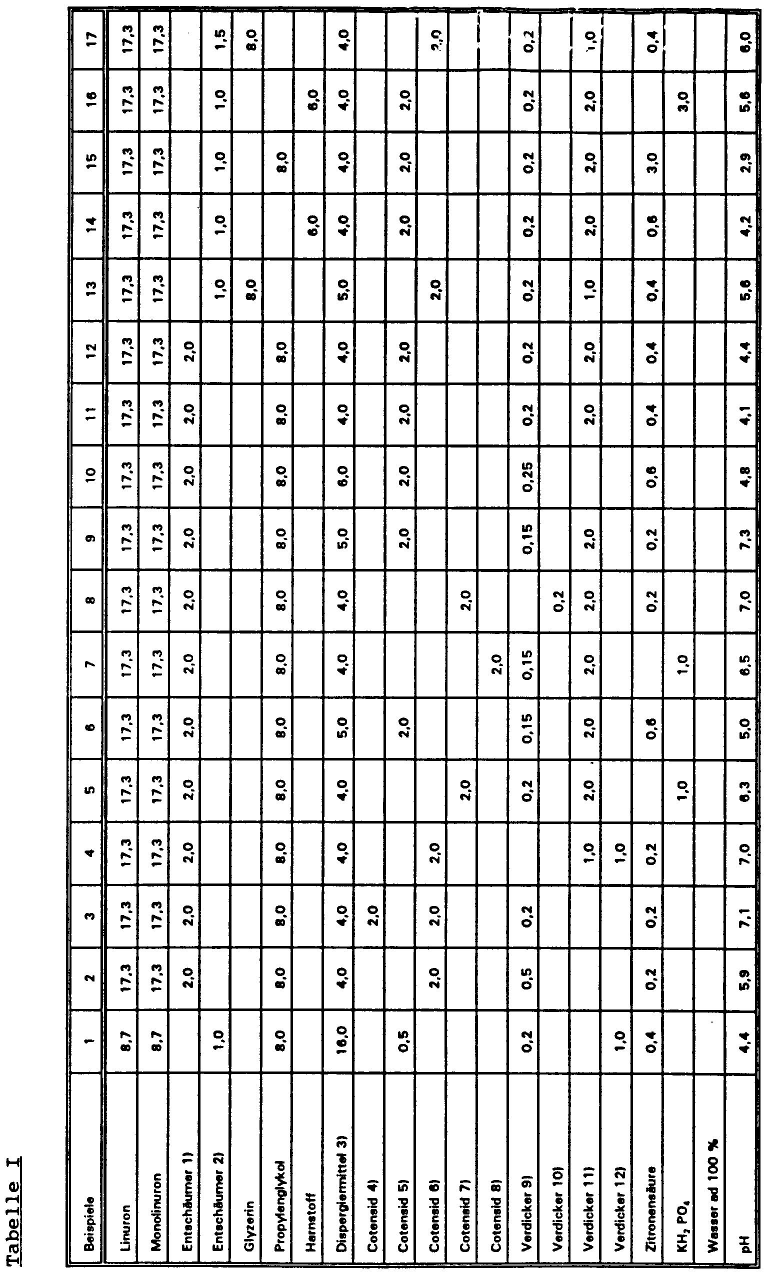

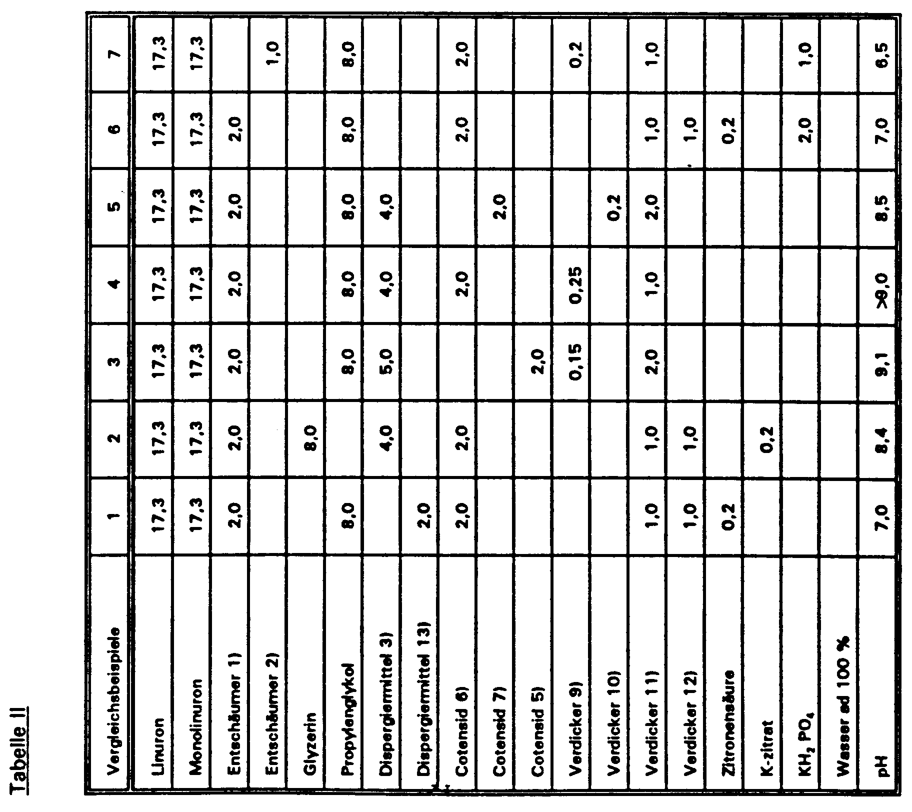

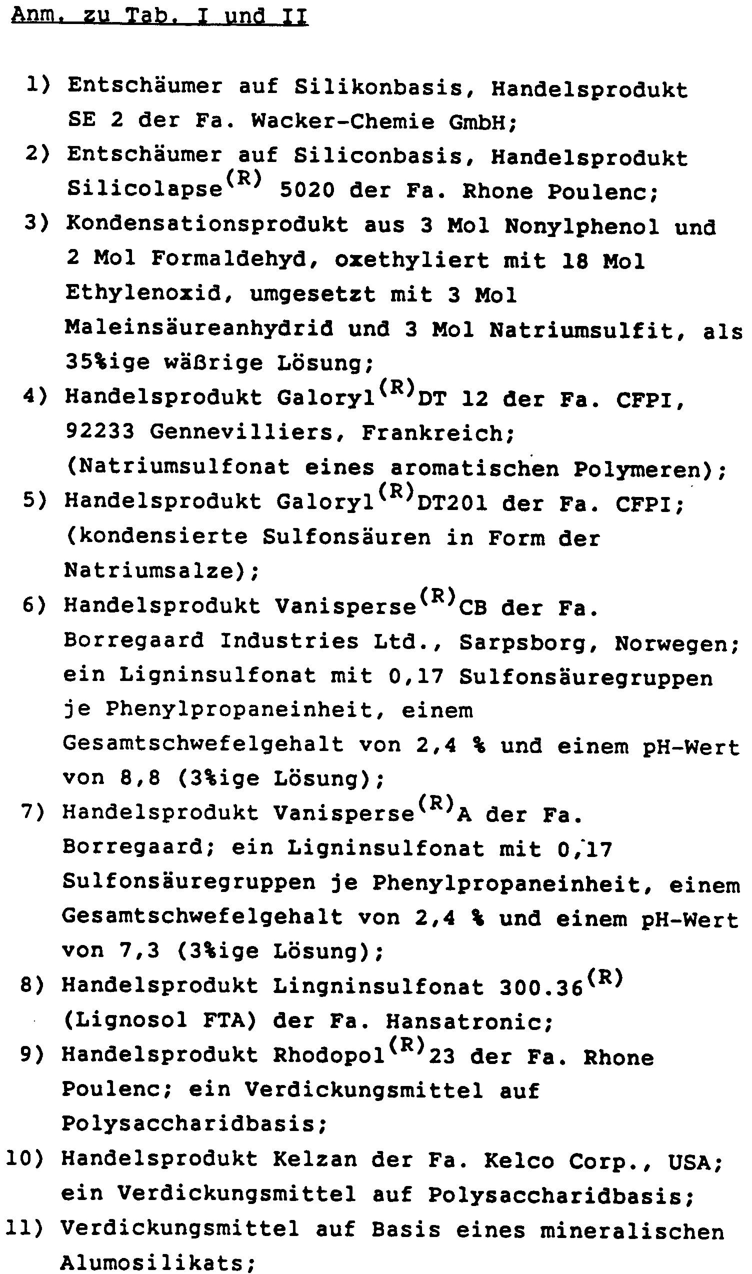

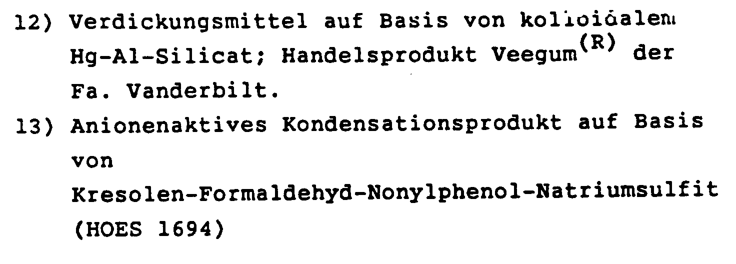

## Patentansprüche (Patentansprüche für folgende(n) Vertragsstaat(en): AT, BE, CH, DE, DK, FR, GB, IT, LI, NL, SE)

1. Wäßriges herbizides Dispersionskonzentrat, enthaltend
(a) Linuron und Monolinuron als Wirkstoffe, sowie
(b) ein Sulfobernsteinsäurehalbester-Alkalisalz als Dispergiermittel, hergestellt durch Umsetzung eines Polyglykolethers eines Kondensationsproduktes aus einem (C₈- bis C₁₂)-Alkylphenol und Formaldehyd mit Maleinsäureanhydrid und einem Alkalisulfit,
welchem ein Puffersystem zur Einstellung des pH-Wertes auf 2,5, vorzugsweise 3,0, bis 7,5 zugesetzt ist.

2. Dispersionskonzentrat gemäß Anspruch 1, dadurch gekennzeichnet, daß es ferner (c) ein Cotensid, ausgewählt aus der Gruppe der Ligninsulfonate, Alkalisalze einer Sulfonsäure eines Aromatenkondensationsprodukts, und Alkalisalze einer Sulfonsäure eines polymeren Aromaten enthält.

3. Dispersionskonzentrat gemäß Anspruch 2, dadurch gekennzeichnet, daß es 0,1 bis 8 Gew.%, vorzugsweise 1 bis 5 Gew.%, der Komponente (c) enthält.

4. Dispersionskonzentrat gemäß einem der vorhergehenden Ansprüche 1 - 3, dadurch gekennzeichnet, daß das Gewichtsverhältnis von Linuron zu Monolinuron 10 : 1 bis 1 : 10, insbesondere etwa 1 : 1, beträgt.

5. Dispersionskonzentrat gemäß einem der vorhergehenden Ansprüche 1 - 4, dadurch gekennzeichnet, daß es Linuron und Monolinuron jeweils in einer Menge von etwa 8 bis etwa 35 Gew.%, vorzugsweise 7 bis 23 Gew.%, enthält.

6. Dispersionskonzentrat gemäß einem der vorhergehenden Ansprüche 1 - 5, dadurch gekennzeichnet, daß es 0,1 bis 20 Gew.%, vorzugsweise 2 bis 16 Gew.%, der Komponente (b) enthält.

7. Dispersionskonzentrat gemäß einem der vorhergehenden Ansprüche 1 - 6, dadurch gekennzeichnet, daß es ein Puffersystem auf Basis von Zitronensäure und deren Ammonium- und/oder Erdalkalisalzen sowie Dihydrogenphosphaten als Mittel zur Einstellung des pH-Wertes enthält.

8. Dispersionskonzentrat gemäß einem der vorhergehenden Ansprüche 1 - 7, dadurch gekennzeichnet, daß es zusätzlich Verdicker, Frostschutzmittel, Entschäumer und/oder Konservierungsmittel enthält.

9. Dispersionskonzentrat gemäß einem der vorhergehenden Ansprüche 1 - 8, dadurch gekennzeichnet, daß es einen pH-Wert von 3,5 bis 7,0 aufweist.

10. Verfahren zur Herstellung eines Dispersionskonzentrats gemäß einem der Ansprüche 1 bis 9, dadurch gekennzeichnet, daß man die Komponenten mit Wasser verrührt, die erhaltene grobteilige Suspension gegebenenfalls zerkleinert und das Produkt anschließend mahlt.

11. Verwendung eines Dispersionskonzentrats gemäß einem der Ansprüche 1 bis 9 zur Herstellung einer Spritzbrühe.

## Patentansprüche (Patentansprüche für folgende(n) Vertragsstaat(en): ES)

1. Verfahren zur Herstellung eines wäßrigen Dispersionskonzentrats, enthaltend
(a) Linuron und Monolinuron als Wirkstoffe, sowie
(b) ein Sulfobernsteinsäurehalbester-Alkalisalz als Dispergiermittel, hergestellt durch Umsetzung eines Polyglykolethers eines Kondensationsproduktes aus einem (C₈- bis C₁₂)-Alkylphenol und Formaldehyd mit Maleinsäureanhydrid und einem Alkalisulfit,
welchem ein Puffersystem zur Einstellung des pH-Wertes auf 2,5, vorzugsweise 3,0, bis 7,5 zugesetzt ist, dadurch gekennzeichnet, daß man die Komponenten mit Wasser verrührt, die erhaltene grobteilige Suspension gegebenenfalls zerkleinert und das Produkt anschließend mahlt.

2. Verfahren gemäß Anspruch 1, dadurch gekennzeichnet, daß ein Dispersionskonzentrat hergestellt wird, welches ferner (c) ein Cotensid, ausgewählt aus der Gruppe der Ligninsulfonate, Alkalisalze einer Sulfonsäure eines Aromatenkondensationsprodukts, und Alkalisalz einer Sulfonsäure eines polymeren Aromaten enthält.

3. Verfahren gemäß Anspruch 2, dadurch gekennzeichnet, daß ein Dispersionskonzentrat hergestellt wird, welches 0,1 bis 8 Gew.-%, vorzugsweise 1 bis 5 Gew.-%, der Komponente (c) enthält.

4. Verfahren gemäß einem der vorhergehenden Ansprüche 1 bis 3, dadurch gekennzeichnet, daß ein Dispersionskonzentrat hergestellt wird, worin das Gewichtsverhältnis von Linuron zu Monolinuron 10:1 bis 1:10, insbesondere etwa 1:1, beträgt.

5. Verfahren gemäß einem der vorhergehenden Ansprüche 1 bis 4, dadurch gekennzeichnet, daß ein Dispersionskonzentrat hergestellt wird, welches Linuron und Monolinuron jeweils in einer Menge von etwa 8 bis etwa 35 Gew.-%, vorzugsweise 7 bis 23 Gew.-%, enthält.

6. Verfahren gemäß einem der vorhergehenden Ansprüche 1 bis 5, dadurch gekennzeichnet, daß ein Dispersionskonzentrat hergestellt wird, welches 0,1 bis 20 Gew.-%, vorzugsweise 2 bis 16 Gew.-%, der Komponente (b) enthält.

7. Verfahren gemäß einem der vorhergehenden Ansprüche 1 bis 6, dadurch gekennzeichnet, daß ein Dispersionskonzentrat hergestellt wird, welches ein Puffersystem auf Basis von Zitronensäure und deren Ammonium- und/oder Erdalkalisalzen sowie Dihydrogenphosphaten als Mittel zur Einstellung des pH-Wertes enthält.

8. Verfahren gemäß einem der vorhergehenden Ansprüche 1 bis 7, dadurch gekennzeichnet, daß ein Dispersionskonzentrat hergestellt wird, welches zusätzlich Verdicker, Frostschutzmittel, Entschäumer und/oder Konservierungsmittel enthält.

9. Verfahren gemäß einem der vorhergehenden Ansprüche 1 bis 8, dadurch gekennzeichnet, daß ein Dispersionskonzentrat hergestellt wird, welches einen pH-Wert von 3,5 bis 7,0 aufweist.

10. Verwendung eines Dispersionskonzentrats gemäß einem der Ansprüche 1 bis 9 zur Herstellung einer Spritzbrühe.

## Claims (Claims for the following Contracting State(s): AT, BE, CH, DE, DK, FR, GB, IT, LI, NL, SE)

1. An aqueous herbicidal dispersion concentrate containing
(a) linuron and monolinuron as active substances, and
(b) an alkali metal salt of a sulfosuccinic mono-ester as dispersant, prepared by reacting a polyglycol ether of a condensation product of a (C₈ to C₁₂)-alkylphenol and formaldehyde with maleic anhydride and an alkali metal sulfite,
to which is added a buffer system for adjusting the pH to 2.5, preferably 3.0 to 7.5.

2. The dispersion concentrate as claimed in claim 1, which contains furthermore
(c) a cosurfactant selected from the group consisting of lignosulfonates, alkali metal salts of a sulfonic acid of an aromatic condensation product, and alkali metal salts of a sulfonic acid of a polymeric aromatic substance.

3. The dispersion concentrate as claimed in claim 2, which contains 0.1 to 8 % by weight, preferably 1 to 5 % by weight, of component (c).

4. The dispersion concentrate as claimed in one of the above claims 1 - 3, wherein the ratio by weight of linuron to monolinuron is 10 : 1 to 1 : 10, in particular approximately 1 : 1.

5. The dispersion concentrate as claimed in one of the above claims 1 - 4, which contains linuron and monolinuron in each case in an amount of from approximately 8 to approximately 35 % by weight, preferably 7 to 23 % by weight.

6. The dispersion concentrate as claimed in one of the above claims 1 - 5, which contains 0.1 to 20 % by weight, preferably 2 to 16 % by weight, of component (b).

7. The dispersion concentrate as claimed in one of the above claims 1 - 6, which contains a buffer system based on citric acid and ammonium and/or alkaline earth metal salts thereof and dihydrogen phosphates as agents for adjusting the pH.

8. The dispersion concentrate as claimed in one of the above claims 1 - 7, which additionally contains thickeners, antifreeze agents, defoamers and/or preservatives.

9. The dispersion concentrate as claimed in one of the above claims 1 - 8, which has a pH of 3.5 to 7.0.

10. A method of preparing a dispersion concentrate as claimed in one of claims 1 to 9, which comprises stirring the components with water, if appropriate comminuting the resulting coarse suspension, and subsequently grinding the product.

11. The use of a dispersion concentrate as claimed in one of claims 1 to 9 for preparing a spray mixture.

## Claims (Claims for the following Contracting State(s): ES)

1. A method of preparing an aqueous dispersion concentrate containing
(a) linuron and monolinuron as active substances, and
(b) an alkali metal salt of a sulfosuccinic mono-ester as dispersant, prepared by reacting a polyglycol ether of a condensation product of a (C₈- to C₁₂) -alkylphenol and formaldehyde with maleic anhydride and an alkali metal sulfite,
to which is added a buffer system for adjusting the pH to 2.5, preferably 3.0 to 7.5, which comprises stirring the components with water, then, if appropriate comminuting the resulting coarse suspension, and subsequently grinding the product.

2. The method as claimed in claim 1, wherein a dispersion concentrate is prepared which contains furthermore (c) a cosurfactant selected from the group consisting of lignosulfonates, alkali metal salts of a sulfonic acid of an aromatic condensation product, and alkali metal salt of a sulfonic acid of a polymeric aromatic substance.

3. The method as claimed in claim 2, wherein a dispersion concentrate is prepared which contains 0.1 to 8 % by weight, preferably 1 to 5 % by weight, of component (c).

4. The method as claimed in one of the above claims 1 to 3, wherein a dispersion concentrate is prepared in which the ratio by weight of linuron to mono-linuron is 10:1 to 1:10, in particular approximately 1:1.

5. The method as claimed in one of the above claims 1 to 4, wherein a dispersion concentrate is prepared which contains linuron and monolinuron in each case in an amount of from approximately 8 to approximately 35 % by weight, preferably 7 to 23 % by weight.

6. The method as claimed in one of the above claims 1 to 5, wherein a dispersion concentrate is prepared which contains 0.1 to 20 % by weight, preferably 2 to 16 % by weight, of component (b).

7. The method as claimed in one of the above claims 1 to 6, wherein a dispersion concentrate is prepared which contains a buffer system based on citric acid and ammonium and/or alkaline earth metal salts thereof and dihydrogen phosphates as agents for adjusting the pH.

8. The method as claimed in one of the above claims 1 to 7, wherein a dispersion concentrate is prepared which additionally contains thickeners, antifreeze agents, defoamers and/or preservatives.

9. The method as claimed in one of the above claims 1 to 8, wherein a dispersion concentrate is prepared which has a pH of 3.5 to 7.0.

10. The use of a dispersion concentrate as claimed in one of claims 1 to 9 for preparing a spray mixture.

## Revendications (Revendications pour l'(les) Etat(s) contractant(s) suivant(s): AT, BE, CH, DE, DK, FR, GB, IT, LI, NL, SE)

1. Concentré en dispersion aqueuse herbicide, contenant
(a) du linuron et du monolinuron comme matières actives, et
(b) un sel d'un métal alcalin d'un hemi-ester de l'acide sulfosuccinique comme dispersant, préparé par réaction, avec l'anhydride maléique et un sulfite d'un métal alcalin, d'un polyglycoléther d'un produit de condensation d'un (alkyle en C₈ à C₁₂)phénol et de formaldéhyde,
auquel est ajouté un système tampon pour ajuster le pH à 2,5, de préférence à une valeur de 3,0 à 7,5.

2. Concentré en dispersion selon la revendication 1, caractérisé en ce qu'il contient en outre
(c) un co-tensioactif, choisi parmi l'ensemble comprenant les ligninesulfonates, les sels de métaux alcalins d'un acide sulfonique d'un produit de condensation d'un aromatique, et les sels de métaux alcalins d'un acide sulfonique d'un aromatique polymère.

3. Concentré en dispersion selon la revendication 2, caractérisé en ce qu'il contient de 0,1 à 8 % en poids et de préférence de 1 à 5 % en poids du constituant (c).

4. Concentré en dispersion selon l'une des revendications 1 à 3 ci-dessus, caractérisé en ce que le rapport pondéral du linuron au monolinuron est de 10:1 à 1:10, en particulier d'environ 1:1.

5. Concentré en dispersion selon l'une des revendications précédentes 1 à 4, caractérisé en ce qu'il contient du linuron et du monolinuron, chacun en une quantité d'environ 8 à environ 35 % en poids et de préférence de 7 à 23 % en poids.

6. Concentré en dispersion selon l'une des revendications précédentes 1 à 5, caractérisé en ce qu'il contient de 0,1 à 20 % en poids et de préférence de 2 à 16 % en poids du constituant (b).

7. Concentré en dispersion selon l'une des revendications précédentes 1 à 6, caractérisé en ce qu'il contient un système tampon à base d'acide citrique et de ses sels d'ammonium et/ou de métaux alcalino-terreux, ainsi que des dihydrogénophosphates, comme composés destinés à ajuster le pH.

8. Concentré en dispersion selon l'une des revendications précédentes 1 à 7, caractérisé en ce qu'il contient en outre des épaississants, des antigels, des antimoussants et/ou des conservateurs.

9. Concentré en dispersion selon l'une des revendications précédentes 1 à 8, caractérisé en ce qu'il a un pH de 3,5 à 7,0.

10. Procédé pour préparer un concentré en dispersion selon l'une des revendications 1 à 9, caractérisé en ce qu'on délaie les constituants avec de l'eau, on fragmente éventuellement la suspension grossière obtenue, puis on broie le produit.

11. Utilisation d'un concentré en dispersion selon l'une des revendications 1 à 9 pour préparer une bouillie pour pulvérisation.

## Revendications (Revendications pour l'(les) Etat(s) contractant(s) suivant(s): ES)

1. Procédé pour préparer un concentré en dispersion aqueuse, contenant
(a) du linuron et du monolinuron comme matières actives, et
(b) un sel d'un métal alcalin d'un hémi-ester de l'acide sulfosuccinique comme dispersant, préparé par réaction, avec l'anhydride maléique et un sulfite d'un métal alcalin, d'un polyglycoléther d'un produit de condensation d'un (alkyle en C₈ à C₁₂)phénol et de formaldéhyde,
auquel est ajouté un système tampon pour ajuster le pH à 2,5, de préférence à une valeur de 3,0 à 7,5, caractérisé en ce qu'on délaye les constituants à l'eau, on fragmente éventuellement la suspension grossière obtenue, puis on broie le produit.

2. Procédé selon la revendication 1, caractérisé en ce qu'on prépare un concentré en dispersion qui contient, en plus de (c), un co-tensioactif choisi parmi l'ensemble comprenant les ligninesulfonates, les sels de métaux alcalins d'un acide sulfonique d'un produit de condensation d'aromatiques, et un sel d'un métal alcalin d'un acide sulfonique d'un aromatique polymère.

3. Procédé selon la revendication 2, caractérisé en ce qu'il consiste à préparer un concentré en dispersion, qui contient de 0,1 à 8 % en poids et de préférence de 1 à 5 % en poids du constituant (c).

4. Procédé selon l'une des revendications 1 à 3 ci-dessus, caractérisé en ce que le rapport pondéral du linuron au monolinuron est de 10:1 à 1:10, en particulier d'environ 1:1.

5. Procédé selon l'une des revendications précédentes 1 à 4, caractérisé en ce qu'il consiste à préparer un concentré en dispersion, qui contient du linuron et du monolinuron, chacun en une quantité d'environ 8 à environ 35 % en poids et de préférence de 7 à 23 % en poids.

6. Procédé selon l'une des revendications précédentes 1 à 5, caractérisé en ce qu'il consiste à préparer un concentré en dispersion, qui contient de 0,1 à 20 % en poids et de préférence de 2 à 16 % en poids du constituant (b).

7. Procédé selon l'une des revendications précédentes 1 à 6, caractérisé en ce qu'il consiste à préparer un concentré en dispersion, qui contient un système tampon à base d'acide citrique et de ses sels d'ammonium et/ou de métaux alcalino-terreux, ainsi que des dihydrogénophosphates, comme composés destinés à ajuster le pH.

8. Procédé selon l'une des revendications précédentes 1 à 7, caractérisé en ce qu'il consiste à préparer un concentré en dispersion, qui contient en outre des épaississants, des antigels, des antimoussants et/ou des conservateurs.

9. Procédé selon l'une des revendications précédentes 1 à 8, caractérisé en ce qu'il a un pH de 3,5 à 7,0.

10. Utilisation d'un concentré en dispersion selon l'une des revendications 1 à 9 pour préparer une bouillie pour pulvérisation.
